**Europäisches Patentamt**

**European Patent Office**

**Office européen des brevets**

(11) Veröffentlichungsnummer: **0 239 768 B1**

(12) # EUROPÄISCHE PATENTSCHRIFT

(45) Veröffentlichungstag der Patentschrift: **18.12.91**

(51) Int. Cl.⁵: $G01B$ **11/02**, $G01D$ 5/36

(21) Anmeldenummer: **87102276.0**

(22) Anmeldetag: **18.02.87**

(54) **Messeinrichtung.**

(30) Priorität: **04.04.86 DE 3611204**

(43) Veröffentlichungstag der Anmeldung:
**07.10.87 Patentblatt 87/41**

(45) Bekanntmachung des Hinweises auf die
Patenterteilung:
**18.12.91 Patentblatt 91/51**

(84) Benannte Vertragsstaaten:
**AT CH DE ES FR GB IT LI NL SE**

(56) Entgegenhaltungen:
**EP-A- 0 165 392**
**DE-U- 8 307 146**
**GB-A- 1 472 876**

(73) Patentinhaber: **Dr. Johannes Heidenhain GmbH**
**Dr.-Johannes-Heidenhain-Strasse 5 Postfach 1260**
**W-8225 Traunreut(DE)**

(72) Erfinder: **Nelle, Günther, Dr.**
**Eichenweg 12**
**W-8221 Bergen(DE)**

## Beschreibung

Die Erfindung betrifft eine Meßeinrichtung gemäß dem Oberbegriff der Ansprüche 1 und 2.

Derartige Meßeinrichtungen werden insbesondere bei Bearbeitungsmaschinen zur Messung der Relativlage eines Werkzeugs bezüglich eines zu bearbeitenden Werkstücks sowie bei Koordinatenmeßmaschinen zur Ermittlung von Lage und/oder Abmessungen von Prüfobjekten eingesetzt.

Bei einer solchen Meßeinrichtung können die an den Referenzmarken erzeugten Referenzsignale auf verschiedene Weise verwertet werden, z.B. zum Reproduzieren der Nullposition im Zähler, zum Anfahren einer bestimmten Position zu Beginn einer Messung oder zur Kontrolle von Störimpulsen sowie zur Beaufschlagung einer nachgeschalteten Steuereinrichtung.

Aus der DE-AS 25 40 412 ist eine Meßeinrichtung bekannt, bei der eine Maßverkörperung eine Teilung und dieser Teilung absolut zugeordnete identische Referenzmarken in zueinander festgelegten Abständen aufweist. Zur Auswahl wenigstens einer für die Messung benötigten Referenzmarke ist wenigstens ein in einer Nut des Maßstabs verschiebbares Auswahlelement in Form eines Magneten vorgesehen. Eine Abtasteinheit tastet die Teilung zur Erzeugung wenigstens eines periodischen Abtastsignals und die Referenzmarken zur Erzeugung von Referenzsignalen ab. Die Abtasteinheit enthält ferner ein Schaltelement, das beim Überfahren eines einer ausgewählten Referenzmarke zugeordneten Auswahlelements ein Auswahlsignal liefert. Nur beim gleichzeitigen Auftreten des Referenzsignals der ausgewählten Referenzmarke und des zugeordneten Auswahlsignals gibt eine nachgeschaltete Baueinheit ein Steuersignal ab.

Beim Einsatz dieser Meßeinrichtung an einer Bearbeitungsmaschine kann es aber bei Erschütterungen zu Verschiebungen des Auswahlelements in der Nut kommen, so daß die eindeutige Zuordnung des Auswahlelements zur ausgewählten Referenzmarke und ein Wirksamwerden der ausgewählten Referenzmarke nicht mehr gewährleistet sind. Bei dicht benachbarten Referenzmarken kann bei derartigen Verschiebungen des Auswahlelements auch eine falsche Referenzmarke zur Wirkung gelangen, so daß ein falscher Steuervorgang, beispielsweise ein Nullungsvorgang, im Zähler ausgelöst wird, der ein falsches Meßergebnis zur Folge hat. Jedes in Bewegungsrichtung der Abtasteinheit verschiebbare Auswahlelement muß daher bezüglich der jeweils ausgewählten Referenzmarke in einer reproduzierbaren Lage mittels zusätzlicher Mittel in der Nut fixierbar sein.

In der DE-PS 32 45 914 ist eine Meßeinrichtung beschrieben, bei der eine Maßverkörperung eine Teilung und dieser Teilung absolut zugeordnete identische Referenzmarken in zueinander festgelegten Abständen aufweist. Zur Auswahl wenigstens einer für die Messung benötigten Referenzmarke ist den Referenzmarken eine Spur mit wenigstens einer elektisch aufgebrachten Auswahlinformation zugeordnet, die von einem Element der Abtasteinheit abgetastet wird, so daß wenigstens eine Referenzmarke ausgewählt und zur Wirkung gebracht werden kann.

Bei dieser Meßeinrichtung ist zwar eine unveränderliche eindeutige Zuordnung der Auswahlinformation zur ausgewählten Referenzmarke gewährleistet, jedoch sind zur Auswahl der für die Messung benötigten Referenzmarken eine gesonderte Spur mit den zugehörigen Auswahlinformationen auf der Maßverkörperung sowie ein zusätzliches Element in der Abtasteinheit zur Abtastung dieser Auswahlinformation erforderlich.

Der Erfindung liegt die Aufgabe zugrunde, bei einer Meßeinrichtung der genannten Gattung die Auswahl der für eine Messung benötigten wenigstens einen Referenzmarke wesentlich zu vereinfachen.

Diese Aufgabe wird erfinungsgemäß durch die kennzeichnenden Merkmale der Ansprüche 1 und 2 gelöst.

Die mit der Erfindung erzielten Vorteile bestehen insbesondere darin, daß zur Auswahl der für die Messung benötigten wenigstens einen Referenzmarke keine zusätzlichen Elemente erforderlich sind, so daß sich eine besonders einfach aufgebaute und preiswerte Meßeinrichtung ergibt. Mit der vorgeschlagenen Auswahl der für die Messung benötigten Referenzmarken allein durch die Abtastung der erfindungsgemäß ausgebildeten Referenzmarken selbst können keine fehlerhaften Steuervorgänge mehr ausgelöst werden, so daß die Meßgenauigkeit und die Bearbeitungsgenauigkeit sowie die Betriebssicherheit bei Bearbeitungsmaschinen insgesamt erhöht werden.

Vorteilhafte Ausbildungen der Erfindung entnimmt man den Unteransprüchen.

Ausführungsbeispiele der Erfindung werden anhand der Zeichnung näher erläutert.

Es zeigen

Figur 1    eine lichtelektrische inkrementale Meßeinrichtung in einer schematischen Seitenansicht;

Figur 2    eine Draufsicht auf einen ersten Maßstab, eine erste Abtastplatte und eine erste Photoelementenplatte;

Figur 3    ein erstes Signaldiagramm;

Figur 4    eine Draufsicht auf einen zweiten Maßstab, eine zweite Abtastplatte und eine zweite Photoelementenplatte;

Figur 5    ein zweites Signaldiagramm;

Figur 6     eine Draufsicht auf einen dritten Maßstab, eine dritte Abtastplatte und eine dritte Photoelementenplatte;

Figur 7     ein drittes Signaldiagramm;

Figur 8     eine Draufsicht auf einen vierten Maßstab, eine vierte Abtastplatte und eine vierte Photoelementenplatte sowie

Figur 9     ein viertes Signaldiagramm.

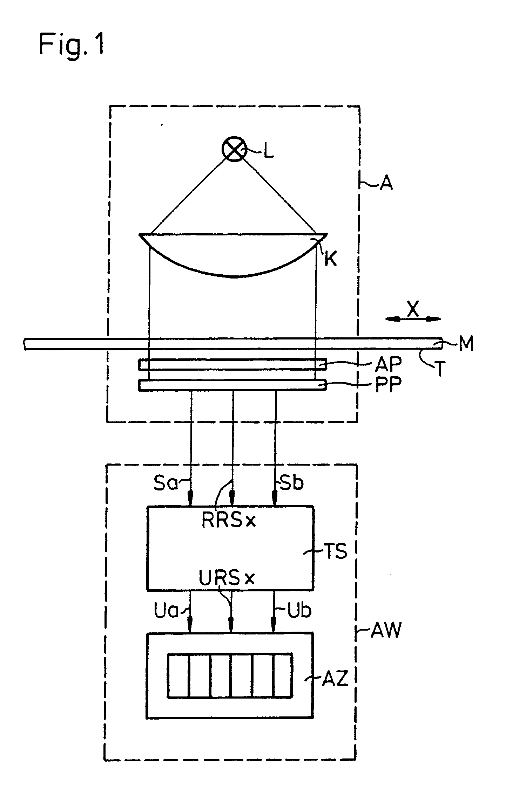

In Figur 1 ist eine lichtelektrische inkrementale Längenmeßeinrichtung in einer schematischen Seitenansicht dargestellt, die aus einer Maßverkörperung M in Form eines Maßstabes und aus einer Abtasteinheit A besteht, die in nicht gezeigter Weise jeweils mit Objekten verbunden sind, deren Relativlage gemessen werden soll; diese beiden Objekte können beispielsweise durch das Bett und durch einen Schlitten einer Bearbeitungsmaschine gebildet sein. Auf dem Maßstab H ist eine inkrementale Teilung T aufgebracht, die im Durchlicht berührungsfrei lichtelektrisch von der Abtasteinheit A abgetastet wird. Die Abtasteinheit A enthält eine Lichtquelle L, einen Kondensor K, eine Abtastplatte AP sowie eine Photoelementenplatte PP.

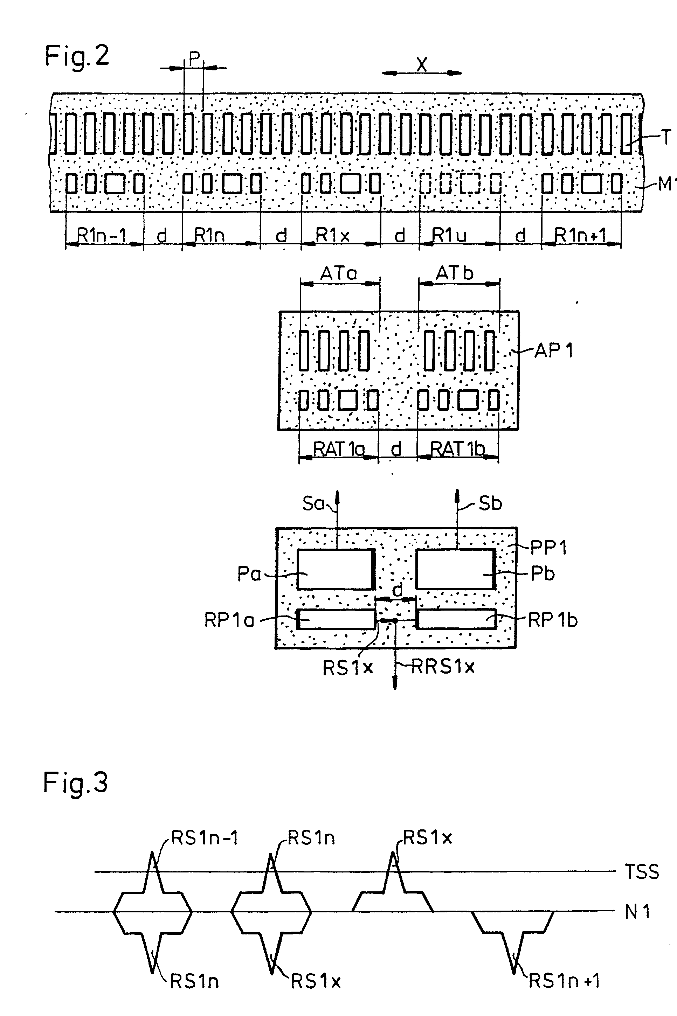

In Figur 2 sind ein erster Maßstab M1, eine erste Abtastplatte AP1 sowie eine erste Photoelementenplatte PP1 in einer Draufsicht dargestellt. Der erste Maßstab M1 weist die inkrementale Teilung T mit einer Teilungsperiode P in Form eines äquidistanten Strichgitters und entlang dieser Teilung T in Meßrichtung X erste identische Referenzmarken R1n (n = 1,2,3,...) mit einer bestimmten unregelmässigen Strichverteilung auf, die der inkrementalen Teilung T absolut zugeordnet sind; diese ersten Referenzmarken R1n weisen in Meßrichtung X einen gleichen gegenseitigen Abstand d auf. Zur Abtastung der Teilung T enthält die erste Abtastplatte AP1 zwei Abtastteilungen ATa,ATb, die die gleiche Teilungsperiode P wie die Teilung T aufweisen und mit dieser identisch sind, aber in Meßrichtung X um ein Viertel der Teilungsperiode P zueinander versetzt sind. Zur Abtastung der Teilung T sind ferner auf der ersten Photoelementenplatte PP1 zwei Photoelemente Pa,Pb aufgebracht, die den beiden Abtastteilungen ATa,ATb der ersten Abtastplatte AP1 jeweils zugeordnet sind.

Bei der Meßbewegung der Abtasteinheit A bezüglich des ersten Maßstabs M1 werden die von der Lichtquelle L ausgehenden, vom Kondensor K parallel gerichteten Lichtstrahlen durch die Teilung T und die beiden Abtastteilungen ATa,ATb moduliert und fallen auf die beiden Photoelemente Pa,Pb, die zwei periodische Abtastsignale Sa,Sb erzeugen, die einer Triggerstufe TS in einer Auswerteeinrichtung AW zur Triggerung zugeleitet werden (Figur 1). Die Triggerstufe TS erzeugt aus den beiden Abtastsignalen Sa,Sb zwei Rechtecksignale Ua,Ub, die in der Auswerteeinrichtung AW eine Anzeigeeinheit AZ mit einem Richtungsdiskriminator und einem Zähler zur digitalen Anzeige der Meßwerte der Relativlage der beiden Objekte beaufschlagen. Aufgrund des gegenseitigen Versatzes der beiden Abtastteilungen ATa,ATb um ein Viertel der Teilungsperiode P weisen die beiden Rechtecksignale Ua,Ub einen gegenseitigen Phasenversatz von 90° auf, der eine Diskriminierung der Meßrichtung X erlaubt.

Zur gleichzeitigen Abtastung jeweils zweier erster identischer Referenzmarken R1n des ersten Maßstabs M1 enthält die erste Abtastplatte AP1 zwei erste Referenzabtastteilungen RAT1a,RAT1b, die in ihrer Strichverteilung mit der Strichverteilung der ersten Referenzmarken R1n identisch sind und in Meßrichtung X den gleichen gegenseitigen Abstand d wie die ersten Referenzmarken R1n aufweisen. Zur gleichzeitigen Abtastung jeweils zweier erster identischer Referenzmarken R1n sind ferner auf der ersten Photoelementenplatte PP1 zwei erste Referenzphotoelemente RP1a,RP1b als erste Referenzabtastelemente aufgebracht, die den beiden ersten Referenzabtastteilungen RAT1a,RAT1b der ersten Abtastplatte AP1 jeweils zugeordnet sind und ebenfalls den gleichen gegenseitigen Abstand d aufweisen; die beiden ersten Referenzphotoelemente RP1a, RP1b sind antiparallel zusammengeschaltet.

Bei der Herstellung des ersten Maßstabs M1 werden diese ersten identischen Referenzmarken R1n mit dem gleichen gegenseitigen Abstand d lückenlos über die gesamte Länge des ersten Maßstabs M1 aufgebracht. Von diesen ersten Referenzmarken R1n sollen nur wenige erste Referenzmarken R1x für die Messung ausgewählt werden. Die jeweiligen Lagen dieser ausgewählten ersten Referenzmarken R1x sollen erst beim Einbau des ersten Maßstabs M1 in die Meßeinrichtung oder beim Kunden festgelegt werden. Zu diesem Zweck können alle für die Messung nicht benötigten, unausgewählten ersten Referenzmarken R1n, beispielsweise durch Abdecken mit einer Folie oder durch Entfernen mittels Ätzens oder Schleifens, unwirksam gemacht werden. Je länger aber der erste Maßstab M1 und je kürzer die gleichen gegenseitigen Abstände d zwischen den ersten identischen Referenzmarken R1n sind, um so mehr unausgewählte erste Referenzmarken R1n müssen auf diese Weise unwirksam gemacht werden. Die Erfindung ermöglicht es, durch das Unwirksammachen von n ersten Referenzmarken R1n n erste Referenzmarken R1x auswählen zu können.

In Figur 2 sind auf dem ersten Maßstab M1 von links nach rechts zwei unausgewählte erste Referenzmarken R1n-1,R1n, eine ausgewählte erste Referenzmarke R1x, eine unwirksame erste Referenzmarke R1u und eine unausgewählte erste Referenzmarke R1n+1 dargestellt. Bei der Abtastung des ersten Maßstabs M1 von links nach rechts durch die Abtasteinheit A erzeugen das eine erste Referenzphotoelement RP1a bei der Abtastung der unausgewählten ersten Referenzmarke R1n-1 gemäß Figur 3 ein erstes Referenzsignal RS1n-1 mit positiver Polarität und das andere erste Referenzphotoelement RP1b bei der Abtastung der unausgewählten ersten Referenzmarke R1n ein erstes Referenzsignal RS1n mit negativer Polarität, die zu einer ersten Nullinie N1 spiegelsymmetrisch sind und sich bei ihrer additiven Überlagerung gegenseitig aufheben, so daß kein auswertbares resultierendes erstes Referenzsignal erzeugt wird.

Bei der Abtastung der unausgewählten ersten Refererenzmarke R1n erzeugen das eine erste Referenzphotoelement RP1a ein erstes Referenzsignal RS1n mit positiver Polarität und das andere erste Referenzphotoelement RP1b bei der Abtastung der ausgewählten ersten Referenzmarke R1x ein erstes Referenzsignal RS1x mit negativer Polarität, die zur ersten Nullinie N1 spiegelsymmetrisch sind und sich bei ihrer additiven Überlagerung gegenseitig aufheben, so daß wiederum kein auswertbares resultierendes erstes Referenzsignal erzeugt wird.

Bei der Abtastung der ausgewählten ersten Referenzmarke R1x erzeugen das eine erste Referenzphotoelement RP1a ein erstes Referenzsignal RS1x mit positiver Polarität und das andere erste Referenzphotoelement RP1b bei der Abtastung der unwirksamen ersten Referenzmarke R1u kein erstes Referenzsignal, so daß das erste Referenzsignal RS1x ein auswertbares resultierendes erstes Referenzsignal RRS1x bildet, das von der Triggerstufe TS (Figur 1) mit einer positiven Triggerschwellenspannung TSS in ein rechteckiges erstes Referenzsignal URS1x umgewandelt und der Anzeigeeinheit AZ, beispielsweise zum Nullsetzen des Zählers, zugeführt wird.

Bei der Abtastung der unwirksamen ersten Referenzmarke R1u erzeugen das eine erste Referenzphotoelement RP1a kein erstes Referenzsignal und das andere erste Referenzphotoelement RP1b bei der Abtastung der unausgewählten ersten Referenzmarke R1n+1 ein erstes Referenzsignal RS1n+1 mit negativer Polarität, das der Triggerstufe TS zugeführt, aber wegen derer positiven Triggerschwellenspannung TSS nicht getriggert wird, so daß am Ausgang der Triggerstufe TS kein rechteckiges erstes Referenzsignal auftritt.

Gemäß Figur 2 sind zur Erzeugung des resultierenden ersten Referenzsignals RRS1x die unwirksame erste Referenzmarke R1u auf der rechten Seite der ausgewählten ersten Referenzmarke R1x angeordnet und eine positive Triggerschwellenspannung TSS der Triggerstufe TS gewählt worden. Zur Erzeugung dieses resultierenden ersten Referenzsignals RRS1x kann die unwirksame erste Referenzmarke R1u auch auf der linken Seite der ausgewählten ersten Referenzmarke R1x angeordnet sein; in diesem Fall muß aber eine negative Triggerschwellenspannung TSS gewählt werden.

Das erste Referenzsignal RS1n-1 mit Positiver Polarität und das erste Peferenzsignal RS1n mit negativer Polarität, die von den beiden ersten Referenzphotoelementen RP1a,RP1b gleichzeitig erzeugt und einander additiv überlagert werden, können auch in dem Maß verschieden groß sein, daß sich nur ein resultierendes erstes Referenzsignal ergibt, das unterhalb der Triggerschwellenspannung TSS der Triggerstufe TS liegt, so daß kein rechteckiges erstes Referenzsignal erzeugt wird.

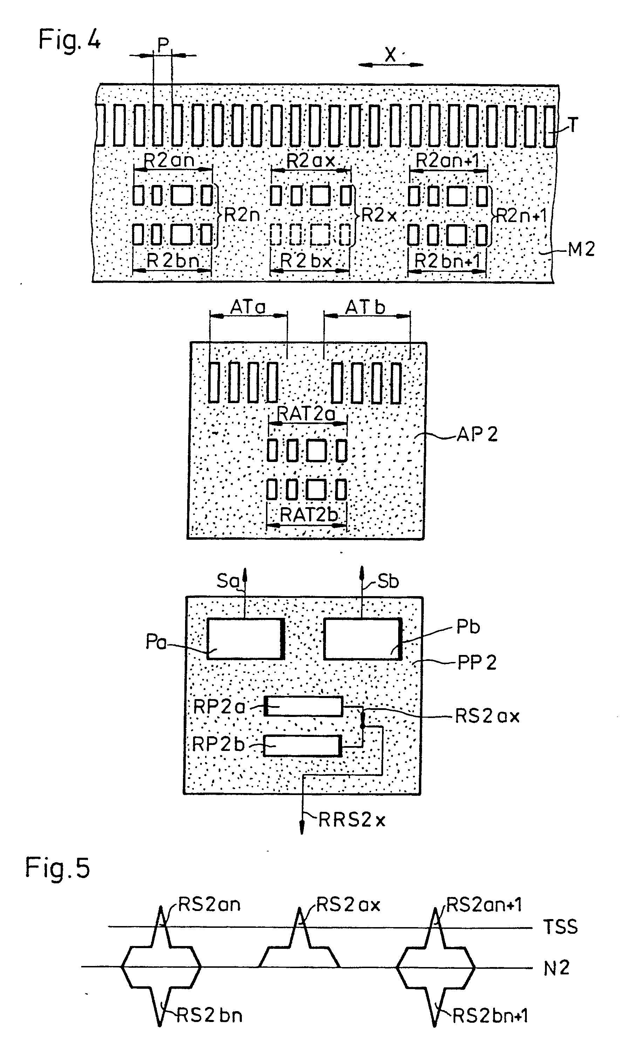

In Figur 4 sind ein zweiter Maßstab M2, eine zweite Abtastplatte AP2 sowie eine zweite Photoelementenplatte PP2 in einer Draufsicht dargestellt. Der zweite Maßstab M2 weist die inkrementale Teilung T gemäß Figur 2 und entlang dieser Teilung T in Meßrichtung X zweite identische Referenzmarken R2n (n = 1,2,3,...) mit einer bestimmten unregelmäßigen Strichverteilung auf, die der Teilung T absolut zugeordnet sind; diese zweiten Referenzmarken R2n weisen in Meßrichtung X einen gleichen gegenseitigen Abstand auf. Die zweiten Referenzmarken R2n bestehen jeweils aus zwei Referenzmarkenteilen R2an, R2bn, die jeweils senkrecht zur Meßrichtung X übereinanderliegen.

Zur Abtastung der Teilung T enthält die zweite Abtastplatte AP2 die beiden Abtastteilungen ATa,ATb und die zweite Photoelementenplatte PP2 die beiden Photoelemente Pa,Pb zur Erzeugung der beiden periodischen Abtastsignale Sa,Sb gemäß Figur 2.

Zur jeweils gleichzeitigen Abtastung der beiden Referenzmarkenteile R2an,R2bn der zweiten Referenzmarken R2n enthält die zweite Abtastplatte AP2 zwei zweite Referenzabtastteilungen RAT2a,RAT2b, die in ihrer Strichverteilung mit der Strichverteilung der beiden Referenzmarkenteile R2an,R2bn der zweiten Referenzmarken R2n übereinstimmen und senkrecht zur Meßrichtung X übereinanderliegen. Zur jeweils gleichzeitigen Abtastung der beiden Referenzmarkenteile R2an,R2bn der zweiten Referenzmarken R2n sind ferner auf der zweiten Photoelementenplatte PP2 zwei zweite Referenzphotoelemente RP2a,RP2b als zweite Referenzabtastelemente aufgebracht, die den beiden zweiten Referenzabtastteilungen RAT2a, RAT2b der zweiten Abtastplatte AP2 jeweils zugeordnet sind; die beiden zweiten Referenzphotoelemente RP2a,RP2b sind antiparallel zusammengeschaltet und liegen senkrecht zur Meßrichtung X übereinander.

In Figur 4 sind auf dem zweiten Maßstab M2 von links nach rechts eine unausgewählte zweite Referenzmarke R2n, eine ausgewählte zweite Referenzmarke R2x und eine unausgewählte zweite Referenzmarke R2n + 1 dargestellt. Während die beiden unausgewählten zweiten Referenzmarken R2n,R2n + 1 jeweils zwei wirksame Referenzmarkenteile R2an,R2bn,R2an + 1, R2bn + 1 besitzen, weist die ausgewählte zweite Referenzmarke R2x einen oberen wirksamen Referenzmarkenteil R2ax und einen unteren unwirksamen Referenzmarkenteil R2bx auf.

Bei der Abtastung des zweiten Maßstabs M2 von links nach rechts durch die Abtasteinheit A erzeugen das eine zweite Referenzphotoelement RP2a bei der Abtastung des oberen wirksamen Referenzmarkenteils R2an der unausgewählten zweiten Referenzmarke R2n gemäß Figur 5 ein zweites Referenzteilsignal RS2an mit positiver Polarität und das andere zweite Referenzphotoelement RP2b bei der Abtastung des unteren wirksamen Referenzmarkenteils R2bn der unausgewählten zweiten Referenzmarke R2n ein zweites Referenzteilsignal RS2bn mit negativer Polarität, die zur zweiten Nullinie N2 spiegelsymmetrisch sind und sich bei ihrer additiven Überlagerung durch die beiden antiparallel geschalteten zweiten Referenzphotoelemente RP2a,RP2b gegenseitig aufheben, so daß kein auswertbares resultierendes zweites Referenzsignal erzeugt wird. In gleicher Weise wird auch bei der Abtastung der beiden wirksamen Referenzmarkenteile R2an + 1,R2bn + 1 der unausgewählten zweiten Referenzmarke R2n + 1 kein auswertbares resultierendes zweites Referenzsignal erzeugt, da sich wiederum die beiden zweiten Referenzteilsignale RS2an + 1,RS2bn + 1 mit entgegengesetzter Polarität gegenseitig aufheben.

Bei der Abtastung der ausgewählten zweiten Referenzmarke R2x erzeugen das eine zweite Referenzphotoelement RP2a bei der Abtastung des oberen wirksamen Referenzmarkenteils R2ax ein zweites Referenzteilsignal RS2ax mit positiver Polarität und das andere zweite Referenzphotoelement RP2b bei der Abtastung des unteren unwirksamen Referenzmarkenteils R2bx kein zweites Referenzteilsignal, so daß das zweite Referenzteilsignal RS2ax mit positiver Polarität ein auswertbares resultierendes zweites Referenzsignal RRS2x bildet, das von der Triggerstufe TS (Figur 1) mit einer positiven Triggerschwellenspannung TSS in ein rechteckiges zweites Referenzsignal URS2x umgewandelt und der Anzeigeeinheit AZ, beispielsweise zum Nullsetzen des Zählers, zugeführt wird.

Gemäß Figur 4 sind zur Erzeugung des resultierenden zweiten Referenzsignals RRS2x bei der ausgewählten zweiten Referenzmarke R2x ein oberer wirksamer Referenzmarkenteil R2ax und ein unterer unwirksamer Referenzmarkenteil R2bx sowie eine positive Triggerschwellenspannung TSS vorgesehen. Zur Erzeugung dieses resultierenden zweiten Referenzsignals RRS2x können auch ein oberer unwirksamer Referenzmarkenteil R2ax und ein unterer wirksamer Referenzmarkenteil R2bx vorgesehen sein; in diesem Fall muß aber eine negative Triggerschwellenspannung TSS gewählt werden.

Das zweite Referenzteilsignal RS2an mit positiver Polarität und das zweite Referenzteilsignal RS2bn mit negativer Polarität, die von den beiden zweiten Referenzphotoelementen RP2a, RP2b gleichzeitig erzeugt und einander additiv überlagert werden, können auch in dem Maß verschieden groß sein, daß sich nur ein resultierendes zweites Referenzsignal ergibt, das unterhalb der Triggerschwellenspannung TSS der Triggerstufe TS liegt, so daß kein rechteckiges zweites Referenzsignal erzeugt wird. Anstelle der in Figur 4 gewählten gleichen Abstände zwischen den zweiten Referenzmarken R2n können auch beliebige unterschiedliche Abstände zwischen den zweiten Referenzmarken R2n vorgesehen sein.

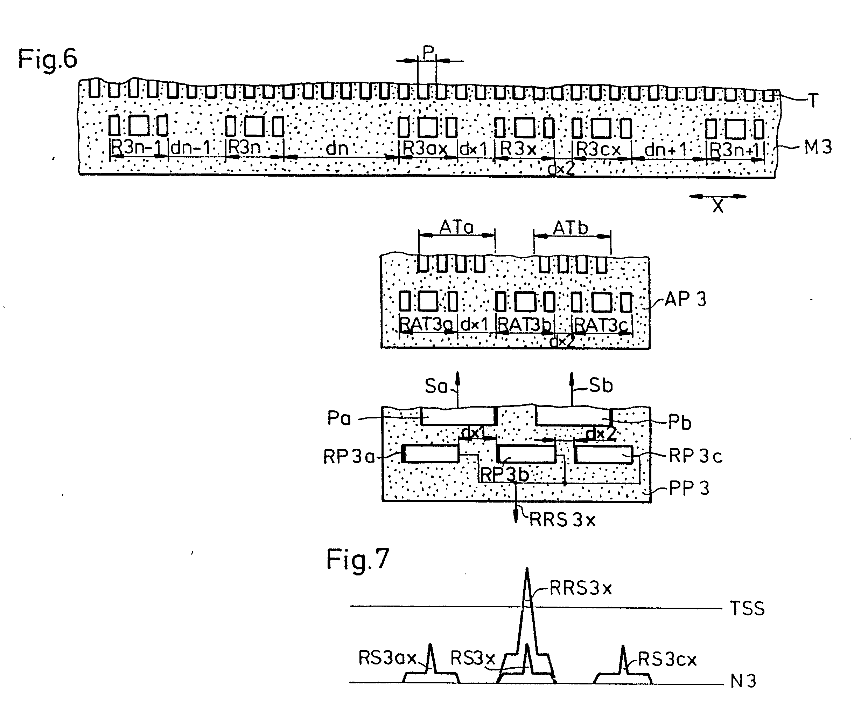

In Figur 6 sind ein dritter Maßstab M3, eine dritte Abtastplatte AP3 sowie eine dritte Photoelementenplatte PP3 in einer Draufsicht dargestellt. Der dritte Maßstab M3 weist die inkrementale Teilung T gemäß Figur 2 und entlang dieser Teilung T in Meßrichtung X dritte identische Referenzmarken R3n(n = 1,2,3,...) mit einer bestimmten unregelmäßigen Strichverteilung auf; diese dritten Referenzmarken R3n weisen unterschiedliche gegenseitige Abstände dn in Meßrichtung X auf.

Zur Abtastung der Teilung T enthält die dritte Abtastplatte AP3 die beiden Abtastteilungen ATa, ATb und die dritte Photoelementenplatte PP3 die beiden Photoelemente Pa,Pb zur Erzeugung der beiden periodischen Abtastsignale Sa,Sb gemäß Figur 2.

Zur Abtastung der dritten identischen Referenzmarken R3n enthält die dritte Abtastplatte AP3 drei dritte Referenzabtastteilungen RAT3a,RAT3b,RAT3c, die in ihrer Strichverteilung mit der Strichverteilung der dritten Referenzmarken R3n übereinstimmen; zwischen der ersten dritten Referenzabtastteilung RAT3a und der zweiten dritten Referenzabtastteilung RAT3b bestehen ein erster ausgewählter Abstand dx1 und zwischen der zweiten dritten Referenzabtastteilung RAT3b und der dritten dritten Referenzabtastteilung RAT3c ein zweiter ausgewählter Abstand dx2 in Meßrichtung X. Zur Abtastung der dritten Referenzmarken R3n sind ferner auf der dritten Photoelementenplatte PP3 drei dritte Referenzphotoelemente RP3a,RP3b,RP3c als dritte Referenzabtastelemente mit den beiden ausgewählten gegenseitigen Abständen dx1,dx2 in Meßrichtung X aufgebracht, die den drei dritten Referenzabtastteilungen RAT3a,RAT3b,RAT3c jeweils zugeordnet sind; die drei dritten Referenzphotoelemente RP3a,RP3b,RP3c sind parallel zusammengeschaltet.

In Figur 6 sind auf dem dritten Maßstab M3 von links nach rechts drei unausgewählte dritte Referenzmarken R3n-1,R3n,R3ax, eine ausgewählte dritte Referenzmarke R3x und zwei unausgewählte dritte Referenzmarken R3cx,R3n + 1 dargestellt. Lediglich zwischen der unausgewählten dritten Referenzmarke R3ax und der ausgewählten dritten Referenzmarke R3x bestehen der erste ausgewählte Abstand dx1 und zwischen der ausgewählten dritten Referenzmarke R3x und der unausgewählten dritten Referenzmarke R3cx der zweite ausgewählte Abstand dx2 in Meßrichtung X, während die beiden Abstände dn-1, dn zwischen den drei unausgewählten dritten Referenzmarken R3n-1,R3n,R3ax und der Abstand dn + 1 zwischen den beiden unausgewählten dritten Referenzmarken R3cx,R3n + 1 sich von den beiden ausgewählten Abständen dx1,dx2 unterscheiden.

Bei der Abtastung des dritten Maßstabs M3 durch die Abtasteinheit A erzeugen die drei dritten Referenzphotoelemente RP3a,RP3b,RP3c der dritten Photoelementenplatte PP3 nur bei der gleichzeitigen Abtastung der ausgewählten Referenzmarke R3x und der beiden benachbarten unausgewählten Referenzmarken R3ax,R3cx mit den beiden ausgewählten gegenseitigen Abständen dx1 ,dx2 drei dritte Referenzsignale RS3ax,RS3x,RS3cx mit gleicher Polarität oberhalb der dritten Nullinie N3 (Figur 7), die in additiver Überlagerung ein auswertbares resultierendes drittes Referenzsignal RRS3x ergeben, das über der Triggerschwellenspannung TSS der Triggerstufe TS liegt, so daß die Triggerstufe TS ein rechteckiges drittes Referenzsignal URS3x liefert, das der Anzeigeeinheit AZ, beispielsweise zum Nullsetzen des Zählers, zugeführt wird. Bei der gleichzeitigen Abtastung dreier dritter Referenzmarken R3n, von deren gegenseitigen Abständen dn sich zumindest ein Abstand dn von den beiden ausgewählten Abständen dx1,dx2 unterscheidet, wird lediglich ein unauswertbares resultierendes drittes Referenzsignal erzeugt, das unterhalb der Triggerschwellenspannung TSS der Triggerschwelle TS liegt, so daß kein rechteckiges drittes Referenzsignal erzeugt werden kann.

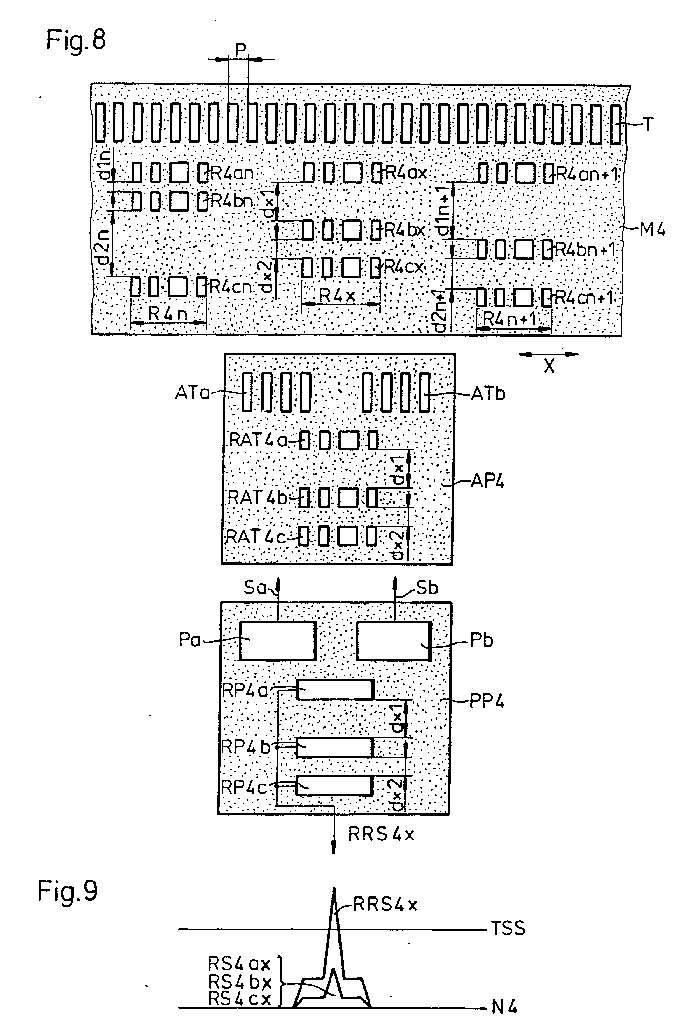

In Figur 8 sind ein vierter Maßstab M4, eine vierte Abtastplatte AP4, sowie eine vierte Photoelementenplatte PP4 in einer Draufsicht dargestellt. Der vierte Maßstab M4 weist die inkrementale Teilung T gemäß Figur 2 und entlang dieser Teilung T in Meßrichtung X vierte identische Referenzmarken R4n (n = 1,2,3,...) mit einer bestimmten unregelmäßigen Strichverteilung auf, die der Teilung T absolut zugeordnet sind; diese vierten Referenzmarken R4n weisen in Meßrichtung X einen gleichen gegenseitigen Abstand auf. Die vierten Referenzmarken R4n bestehen jeweils aus drei übereinanderliegenden Referenzmarkenteilen R4an,R4bn,R4cn mit unterschiedlichen gegenseitigen Abständen d1n,d2n senkrecht zur Meßrichtung X.

Zur Abtastung der Teilung T enthält die vierte Abtastplatte AP4 die beiden Abtastteilungen ATa,ATb und die vierte Photoelementenplatte PP4 die beiden Photoelemente Pa,Pb zur Erzeugung der beiden periodischen Abtastsignale Sa,Sb gemäß Figur 2.

Zur jeweils gleichzeitigen Abtastung der drei Referenzmarkenteile R4an,R4bn,R4cn der vierten Referenzmarken R4n enthält die vierte Abtastplatte AP4 drei übereinanderliegende vierte Referenzabtastteilungen RAT4a,RAT4b,RAT4c, die in ihrer Strichverteilung mit der Strichverteilung der drei Referenzmarkenteile R4an,R4bn,R4cn der vierten Referenzmarken R4n übereinstimmen und senkrecht zur Meßrichtung X zwei ausgewählte gegenseitige Abstände dx1,dx2 aufweisen. Zur jeweils gleichzeitigen Abtastung der drei Referenzmarkenteile R4an,R4bn,R4cn der vierten Referenzmarken R4n sind ferner auf der vierten Photoelementenplatte PP4 drei übereinanderliegende vierte Referenzphotoelemente RP4a,RP4b,RP4c als vierte Referenzabtastelemente mit den beiden ausgewählten gegenseitigen Abständen dx1,dx2 senkrecht zur Meßrichtung X aufgebracht, die den drei vierten Referenzabtastteilungen RAT4a,RAT4b,RAT4c der vierten Abtastplatte AP4 jeweils zugeordnet sind; die drei vierten Referenzphotoelemente RP4a,RP4b,RP4c sind parallel zusammengeschaltet.

In Figur 8 sind auf dem vierten Maßstab M4 von links nach rechts eine unausgewählte vierte Referenzmarke R4n, eine ausgewählte vierte Referenzmarke R4x und eine unausgewählte vierte Referenzmarke R4n + 1 dargestellt. Lediglich die drei Referenzmarkenteile R4ax,R4bx,R4cx der ausgewählten Referenzmarke R4x weisen die beiden ausgewählten gegenseitigen Abstände dx1,dx2 senkrecht zur Meßrichtung X auf, während die beiden gegenseitigen Abstände d1n,d2n der unausgewählten vierten Referenzmarke R4n und die beiden gegenseitigen Abstände d1n + 1,d2n + 1 der unausgewählten vierten Referenzmarke R4n + 1 sich von den beiden ausgewählten Abständen dx1,dx2 unterscheiden.

Bei der Abtastung des vierten Maßstabs M4 durch die Abtasteinheit A erzeugen die drei vierten Referenzphotoelemente RP4a,RP4b,RP4c der vierten Photoelementenplatte PP4 nur bei der gleichzeitigen Abtastung der drei Referenzmarkenteile R4ax,R4bx,R4cx der ausgewählten vierten Referenzmarke R4x mit den beiden ausgewählten gegenseitigen Abständen dx1,dx2 drei vierte Referenzteilsignale RS4ax,RS4bx,RS4cx mit gleicher Polarität oberhalb der vierten Nullinie N4 (Figur 9), die in additiver Überlagerung ein auswertbares resultierendes viertes Referenzsignal RRS4x ergeben, das über der Triggerschwelle TSS der Triggerstufe TS liegt, so daß die Triggerstufe TS ein rechteckiges viertes Referenzsignal URS4x liefert, das der Anzeigeeinheit AZ, beispielsweise zum Nullsetzen des Zählers, zugeführt wird.

Bei der gleichzeitigen Abtastung der drei Referenzmarkenteile R4an,R4bn,R4cn der unausgewählten vierten Referenzmarke R4n, deren beide gegenseitige Abstände d1n,d2n sich von den beiden ausgewählten Abständen dx1,dx2 unterscheiden, sowie der drei Referenzmarkenteile R4an + 1,R4bn + 1,R4cn + 1 der unausgewählten vierten Referenzmarke R4n + 1, deren beide gegenseitige Abstände d1n + 1,d2n + 1 sich ebenfalls von den beiden ausgewählten Abständen dx1,dx2 unterscheiden, wird jeweils lediglich ein unauswertbares resultierendes viertes Referenzsignal erzeugt, das unterhalb der Triggerschwellenspannung TSS der Triggerstufe TS liegt, so daß kein rechteckiges viertes Referenzsignal erzeugt werden kann.

Anstelle der in Figur 8 gewählten gleichen Abstände können zwischen den vierten Referenzmarken R4n auch beliebige unterschiedliche Abstände in Meßrichtung X vorgesehen sein.

Die Triggerschwellenspannung TSS der Triggerstufe TS kann mittels des konstanten Ausgangssignals eines nicht gezeigten Photoelements eingestellt werden, das von der Lichtquelle L durch den Maßstab M außerhalb der Teilung T und der Referenzmarken Rn und durch die Abtastplatte AP außerhalb der Abtastteilungen ATa,ATb und außerhalb der Referenzabtastteilungen RAT mit unmoduliertem Licht (Gleichlicht) beleuchtet wird.

Die Erfindung ist bei lichtelektrischen, magnetischen, induktiven und kapazitiven Längen- oder Winkelmeßeinrichtungen mit Erfolg einsetzbar.

## Patentansprüche

1. Meßeinrichtung zur Messung der Relativlage zweier Objekte, bei der eine Maßverkörperung eine Teilung und entlang der Teilung in Meßrichtung dieser Teilung absolut zugeordnete Referenzmarken aufweist und eine Abtasteinheit die Teilung und die Referenzmarken abtastet, gekennzeichnet durch folgende Merkmale zur Auswahl wenigstens einer für die Messung benötigten Referenzmarke:

a) die Abtasteinheit (A) weist wenigstens zwei Referenzabtastelemente (RP1; RP2) zur gleichzeitigen Abtastung wenigstens zweier Referenzmarken (R1n) zur gleichzeitigen Erzeugung von Referenzsignalen (RS1n-1, RS1n) bzw. zweier Referenzmarkenteile (R2an, R2bn) einer Referenzmarke (R2n) zur Erzeugung von Referenzteilsignalen (RS2an, RS2bn) auf;

b) die gleichzeitig erzeugten Referenzsignale (RS1n-1, RS1n) bzw. Referenzteilsignale (RS2an, RS2bn) sind zur Bildung eines resultierenden Referenzsignals einander überlagerbar;

c) die ausgewählte Referenzmarke (R1x; R2x) weist wenigstens eine benachbarte unwirksame Referenzmarke (R1u) bzw. wenigstens einen unwirksamen Referenzmarkenteil (R2bx) auf;

d) nur bei der gleichzeitigen Abtastung der ausgewählten Referenzmarke (R1x) und der wenigstens einen unwirksamen Referenzmarke (R1u) bzw. des wenigstens einen Referenzmarkenteils (R2ax) mitsamt dem wenigstens einen unwirksamen Referenzmarkenteil (R2bx) der ausgewählten Referenzmarke (R2x) ist ein auswertbares resultierendes Referenzsignal (RRS1x; RRS2x) erzeugbar.

2. Meßeinrichtung zur Messung der Relativlage zweier Objekte, bei der eine Maßverkörperung eine Teilung und entlang der Teilung in Meßrichtung dieser Teilung absolut zugeordnete Referenzmarken aufweist und eine Abtasteinheit die Teilung und die Referenzmarken abtastet, gekennzeichnet durch folgende Merkmale zur Auswahl wenigstens einer für die Messung benötigten Referenzmarke:

a) die Abtasteinheit (A) weist wenigstens zwei Referenzabtastelemente (RP3; RP4) zur gleichzeitigen Abtastung wenigstens zweier Referenzmarken (R3n) zur gleichzeitigen Erzeugung von Referenzsignalen (RS3) bzw. wenigstens zweier Referenzmarkenteile (R4an, R4bn, R4cn) einer Referenzmarke (R4n) zur Erzeugung von Referenzteilsignalen (RS4) auf;

b) die gleichzeitig erzeugten Referenzsignale (RS3) bzw. Referenzteilsignale (RS4) sind zur Bildung eines resultierenden Referenzsignals einander überlagerbar;

c) zwischen der ausgewählten Referenzmarke (R3x) und wenigstens einer benachbarten Referenzmarke (R3ax, R3cx) bzw. zwischen wenigstens zwei Referenzmarkenteilen (R4ax, R4bx, R4cx) der ausgewählten Referenzmarke (R4x) besteht ein ausgewählter Abstand (dx1, dx2);

d) nur bei der gleichzeitigen Abtastung der ausgewählten Referenzmarke (R3x) und der wenigstens einen im ausgewählten Abstand (dx1, dx2) benachbarten Referenzmarke (R3ax, R3cx) bzw. der wenigstens zwei den ausgewählten Abstand (dx1, dx2) aufweisenden Referenzmarkenteile (R4ax, R4bx, R4cx) der ausgewählten Referenzmarke (R4x) ist ein auswertbares resultierendes Referenzsignal (RRS3x; RRS4x) erzeugbar.

3. Meßeinrichtung nach Anspruch 1, dadurch gekennzeichnet, daß die Referenzmarken (R1n) in Meßrichtung X einen gleichen gegenseitigen Abstand (d) aufweisen, daß die Abtasteinheit (A) zwei Referenzabtastelemente (RP1a,RP1b) mit dem gleichen gegenseitigen Abstand (d) in Meßrichtung X enthält, daß die beiden Referenzabtastelemente (RP1a,RP1b) bei der gleichzeitigen Abtastung jeweils zweier Referenzmarken (R1n-1,R1n) zwei Referenzsignale (RS1n-1,RS1n) mit entgegengesetzter Polarität erzeugen, die zur Bildung des resultierenden Referenzsignals einander additiv überlagerbar sind, und daß zu einer Seite der ausgewählten Referenzmarke (R1x) eine unwirksame Referenzmarke (R1u) vorgesehen ist, so daß bei der gleichzeitigen Abtastung zweier unausgewählter Referenzmarken (R1n-1,R1n), einer unausgewählten Referenzmarke (R1n) und der ausgewählten Referenzmarke (R1x) sowie der unwirksamen Referenzmarke (R1u) und einer unausgewählten Referenzmarke (R1n+1) ein unauswertbares resultierendes Referenzsignal und nur bei der gleichzeitigen Abtastung der ausgewählten Referenzmarke (R1x) und der unwirksamen Referenzmarke (R1u) das auswertbare resultierende Referenzsignal (RRS1x) erzeugbar sind.

4. Meßeinrichtung nach Anspruch 1, dadurch gekennzeichnet, daß die Referenzmarken (R2n) jeweils zwei senkrecht zur Meßrichtung X übereinanderliegende Referenzmarkenteile (R2an,R2bn) aufweisen, daß die Abtasteinheit (A) zwei senkrecht zur Meßrichtung X übereinanderliegende Referenzabtastelemente (RP2a,RP2b) enthält, daß die beiden Referenzabtastelemente (RP2a,RP2b) bei der gleichzeitigen Abtastung der beiden Referenzmarkenteile (R2an,R2bn) der jeweiligen Referenzmarke (R2n) zwei Referenzteilsignale (RS2an,RS2bn) mit entgegengesetzter Polarität erzeugen, die zur Bildung des resultierenden Referenzsignals einander additiv überlagerbar sind, und daß die ausgewählte Referenzmarke (R2x) einen unwirksamen Referenzmarkenteil (R2bx) enthält, so daß bei der gleichzeitigen Abtastung der beiden Referenzmarkenteile (R2an,R2bn) einer unausgewählten Referenzmarke (R2n) ein unauswertbares resultierendes Referenzsignal und nur bei der gleichzeitigen Abtastung des wirksamen Referenzmarkenteils (R2ax) und des unwirksamen Referenzmarkenteils (R2bx) der ausgewählten Referenzmarke (R2x) das auswertbare resultierende Referenzsignal (RRS2x) erzeugbar sind.

5. Meßeinrichtung nach Anspruch 2, dadurch gekennzeichnet, daß die Referenzmarken (R3n) in Meßrichtung X unterschiedliche gegenseitige Abstände (dn)(n=1,2,3,...) aufweisen, daß zwischen der ausgewählten Referenzmarke (R3x) und der einen benachbarten Referenzmarke (R3ax) ein erster ausgewählter Abstand (dx1) und zwischen der ausgewählten Referenzmarke (R3x) und der anderen benachbarten Referenzmarke (R3cx) ein zweiter ausgewählter Abstand (dx2) in Meßrichtung X bestehen, daß die Abtasteinheit (A) drei Referenzabtastelemente (RP3a,RP3b,RP3c) mit den beiden ausgewählten gegenseitigen Abständen (dx1,dx2) in Meßrichtung X enthält, daß die drei Referenzabtastelemente (RP3a,RP3b,RP3c) bei der jeweiligen Abtastung der Referenzmarken (R3n) Referenzsignale mit gleicher Polarität erzeugen, die zur Bildung des resultierenden Referenzsignals einander additiv überlagerbar sind, so daß bei der gleichzeitigen Abtastung dreier Referenzmarken (R3n), deren gegenseitige Abstände (dn) sich von den beiden ausgewählten Abständen (dx1,dx2) unterscheiden, ein unauswertbares resultierendes Referenzsignal und nur bei der gleichzeitigen Abtastung der ausgewählten Referenzmarke (R3x) und der beiden benachbarten Referenzmarken (R3ax,R3cx) mit den beiden ausgewählten gegenseitigen Abständen (dx1,dx2) das auswertbare resultierende Referenzsignal (RRS3x) erzeugbar sind.

6. Meßeinrichtung nach Anspruch 2, dadurch gekennzeichnet, daß die Referenzmarken (R4n) jeweils drei übereinanderliegende Referenzmarkenteile (R4an,R4bn,R4cn) mit unterschiedlichen gegenseitigen Abständen (d1n,d2n) senkrecht zur Meßrichtung X aufweisen, daß die drei Referenzmarkenteile (R4ax,R4bx,R4cx) der ausgewählten Referenzmarke (R4x) zwei ausgewählte gegenseitige Abstände (dx1,dx2) senkrecht zur Meßrichtung X aufweisen, daß die Abtasteinheit (A) drei übereinanderliegende Referenzabtastelemente (RP4a,RP4b,RP4c) mit den beiden ausgewählten gegenseitigen Abständen (dx1,dx2) senkrecht zur Meßrichtung X enthält, daß die drei Referenzabtastelemente (RP4a,RP4b,RP4c) bei der gleichzeitigen Abtastung der drei Referenzmarkenteile (R4an,R4bn,R4cn) der jeweiligen Referenzmarke (R4n) drei Referenzteilsignale mit gleicher Polarität erzeugen, die zur Bildung des resultierenden Referenzsignals einander additiv überlagerbar sind, so daß bei der gleichzeitigen Abtastung der drei Referenzmarkenteile (R4an,R4bn,R4cn) einer unausgewählten Referenzmarke (R4n) ein unauswertbares resultierendes Referenzsignal und nur bei der gleichzeitigen Abtastung der drei Referenzmarkenteile (R4ax,R4bx,R4cx) der ausgewählten Referenzmarke (R4x) das auswertbare resultierende Referenzsignal (RRS4x) erzeugbar sind.

7. Meßeinrichtung nach Anspruch 1, dadurch gekennzeichnet, daß die unwirksame Referenzmarke (R1u) durch Entfernen oder Abdecken erzeugbar ist.

8. Meßeinrichtung nach Anspruch 1, dadurch gekennzeichnet, daß der unwirksame Referenzmarkenteil (R2bx) durch Entfernen oder Abdecken erzeugbar ist.

9. Meßeinrichtung nach einem der Ansprüche 3 und 4, dadurch gekennzeichnet, daß die beiden Referenzabtastelemente (RP1a,RP1b;RP2a,RP2b) antiparallel zusammengeschaltet sind.

10. Meßeinrichtung nach einem der Ansprüchen 5 und 6, dadurch gekennzeichnet, daß die drei Referenzabtastelemente (RP3a,RP3b,RP3c;RP4a,RP4b,RP4c) parallel zusammengeschaltet sind.

## Claims

1. Measuring device for measuring the relative position of two objects, in which a material measure exhibits a graduation and has reference marks absolutely assigned along the graduation in the measuring direction of this graduation and a scanning unit which scans the graduation and the reference marks, characterised by the following features for selecting at least one of the reference marks necessary for the measurement:

   a) the scanning unit (A) has at least two reference scanning elements (RP1; RP2) for the simultaneous scanning of at least two reference marks (R1n) for the simultaneous production of reference signals (RS1n-1, RS1n) or two reference mark sections (R2an, R2bn) of a reference mark (R2n) for producing partial reference signals (RS2an, RS2bn);
   b) the simultaneously produced reference signals (RS1n-1, RS1n) or the partial reference signals (RS2an, RS2bn) can be superposed on each other to form a resulting reference signal;

   c) the selected reference mark (R1x; R2x) has at least one adjacent ineffective reference mark (R1u) or at least one ineffective reference mark section (R2bx);
   d) a resulting reference signal (RRS1x; RRS2x) which can be evaluated can only be produced during the simultaneous scanning of the selected reference mark (R1x) and at least the one ineffective reference mark (R1u) or at least the one reference mark section (R2ax) together with at least the one ineffective reference mark part (R2bx) of the selected reference mark (R2x).

2. Measuring device for measuring the relative position of two objects, in which a material measure exhibits a graduation and has reference marks absolutely assigned along the graduation in the measuring direction of this graduation and a scanning unit scans the graduation and the reference marks, characterised by the following features for selecting at last one of the reference marks necessary for the measurement:

   a) the scanning unit (A) has at least two reference scanning elements (RP3; RP4) for the simultaneous scanning of at least two reference marks (R3n) for simultaneously producing reference signals (RS3) or at least two reference mark sections (R4an, R4bn, R4cn) of a reference mark (R4n) for producing partial reference signals (RS4);
   b) the simultaneously produced reference signals (RS3) or the partial reference signals (RS4) are superposed on each other to form a resulting reference signal;
   c) between the selected reference mark (R3x) and at least one of the adjacent reference marks (R3ax, R3cx) or between at least two reference mark sections (R4ax, R4bx, R4cx) of the selected reference mark (R4x) there exists a selected distance (dxl, dx2);
   d) a resulting reference signal (RRS3x; RRS4x) which can be evaluated can be produced only during the simultaneous scanning of the selected reference mark (R3x) and at least one of the reference marks (R3ax, R3cx) adjacent at the selected distance (dx1, dx2), or at least two of the reference mark sections (R4ax, R4bx, R4cx) having the selected distance (dx1, dx2) of the selected reference mark (R4x).

3. Measuring device according to claim 1, characterised in that the reference marks (R1n) have the same mutual distance (d) in the measuring direction X, that the scanning unit (A) contains two reference scanning elements (RP1a, RP1b) with the same mutual distance (d) in the measuring direction X, that the two reference scanning elements (RP1a, RP1b) during the simultaneous scanning of respectively two reference marks (R1n-1, R1n) produce two reference signals (RS1n-1, RS1n) with opposite polarity which, for forming the resulting reference signal, are added together in a superposed manner, and that on one side of the selected reference mark (R1x) there is provided an ineffective reference mark (R1u), so that during the simultaneous scanning of two unselected reference marks (R1n-1, R1n), an unselected reference mark (R1n) and the selected reference mark (R1x) as well as the ineffective reference mark (R1u) and an unselected reference mark (R1n + 1), there can be produced a resulting reference signal which cannot be evaluated and the resulting reference signal (RRS1x) which can be evaluated can be produced only during the simultaneous scanning of the selected reference mark (R1x) and the ineffective reference mark (R1u).

4. Measuring device according to claim 1, characterised in that the reference marks (R2n) each have two reference mark sections (R2an, R2bn) situated on top of each other vertically to the measuring direction X, that the scanning unit (A) contains two reference scanning elements (RP2a, RP2b) situated on top of each other vertically to the measuring direction X, that the two reference scanning elements (RP2a, RP2b) during the simultaneous scanning of the two reference mark sections (R2an, R2bn) of the respective reference mark (R2n) produce two partial reference signals (RS2an, RS2bn) with opposite polarities which can be added in a superposed manner to form the resulting reference signal, and that the selected reference mark (R2x) contains an ineffective reference mark section (R2bx), so that during the simultaneous scanning of the two reference mark sections (R2an, R2bn) of an unselected reference mark (R2n) a resulting reference signal which cannot be evaluated is produced and the resulting reference signal (RRS2x) which can be evaluated can be produced only during the simultaneous scanning of the effective reference mark section (R2ax) and the ineffective reference mark part (R2bx) of the selected reference mark (R2x).

5. Measuring device according to claim 2, characterised in that the reference marks (R3n) have mutually varying distances (dn) (n = 1, 2, 3,...) in the measuring direction X, that between the selected reference mark (R3x) and one of the adjacent reference marks (R3ax) there exists a first selected distance (dx1) and between the selected reference mark (R3x) and the other adjacent reference mark (R3cx) there exists a second selected distance (dx2) in the measuring direction X, that the scanning unit (A) contains three reference scanning elements (RP3a, RP3b, RP3c) with the two mutually selected distances (dx1, dx2) in the measuring direction X, that the three reference scanning elements (RP3a, RP3b, RP3c) during the respective scanning of the reference marks (R3n) produce reference signals of the same polarity which are added in a superposed manner to form the resulting reference signal, so that during the simultaneous scanning of three reference marks (R3n), whose mutual distances (dn) differ from the two selected distances (dx1, dx2), there is produced a resulting reference signal which cannot be evaluated and the resulting reference signal (RRS3x) which can be evaluated can be produced only during the simultaneous scanning of the selected reference mark (R3x) and the two adjacent reference marks (R3ax, R3cx) with the two mutually selected distances (dx1, dx2).

6. Measuring device according to claim 2, characterised in that the reference marks (R4n) each have three superposed reference mark sections (R4an, R4bn, R4cn) with mutually varying distances (d1n, d2n) vertically to the measuring direction X, that the three reference mark sections (R4ax, R4bx, R4cx) of the selected reference mark (R4x) have two mutually selected distances (dx1, dx2) vertically to the measuring direction X, that the scanning unit (A) contains three superposed reference scanning elements (RP4a, RP4b, RP4c) with the two mutually selected distances (dx1, dx2) vertically to the measuring direction X, that the three reference scanning elements (RP4a, RP4b, RP4c) during the simultaneous scanning of the three reference mark sections (R4an, R4bn, R4cn) of the respective reference mark (R4n) produce three partial reference signals of the same polarity which are added in a superposed manner to form the resulting reference signal, so that during the simultaneous scanning of the three reference mark sections (R4an, R4bn, R4cn) of an unselected reference mark (R4n) a resulting reference signal which cannot be evaluated is produced, and a resulting reference signal (RRS4x) which can be evaluated can be produced only during the simultaneous scanning of the three reference mark sections (R4ax, R4bx, R4cx) of the selected reference mark (R4x).

7. Measuring device according to claim 1, characterised in that the ineffective reference mark (R1u) can be produced by removing or covering.

8. Measuring device according to claim 1, characterised in that the ineffective reference mark section (R2bx) can be produced by removing or covering.

9. Measuring device according to one of the claims 3 and 4, characterised in that the two reference scanning elements (RP1a, RP1b; RP2a, RP2b) are connected together in an antiparallel manner.

10. Measuring device according to one of the claims 5 and 6, characterised in that the three reference scanning elements (RP3a, RP3b, RP3c; RP4a, RP4b, RP4c) are connected together in parallel.

## Revendications

1. Dispositif de mesure pour la mesure de la position relative de deux objets, dans lequel une mesure matérialisée présente une graduation et des repères de référence absolus associés, le long de la graduation, dans la direction de mesure de ladite graduation, et dans lequel une unité de lecture lit la graduation et les repères de référence, caractérisé par les caractéristiques suivantes pour la sélection d'au moins un repère de référence nécessaire à la mesure :

a) l'unité de lecture (A) présente au moins deux éléments de lecture de référence (RP1 ; RP2) pour la lecture simultanée d'au moins deux repères de référence (R1n) afin de produire simultanément des signaux de référence (RS1n-1, RS1n) ou de deux parties de repère de référence (R2an, R2bn) d'un repère de référence (R2n) afin de produire des signaux partiels de référence (RS2an, RS2bn) ;
b) les signaux de référence (RS1n-1, RS1n) produits simultanément où les signaux partiels de référence (RS2an, RS2bn) peuvent être mutuellement superposés pour produire un signal de référence résultant ;
c) le repère de référence sélectionné (R1x ; R2x) comporte au moins un repère de référence (R1u) voisin non actif ou au moins une partie de repère de référence (R2bx) non active ;

d) un signal de référence résultant (RRS1x ; RRS2x) exploitable ne peut être produit que lors de la lecture simultanée du repère de référence (R1x) sélectionné et du repère de référence (R1u) non actif, au nombre d'au moins un, ou de la partie de repère de référence (R2ax), au nombre d'au moins un, ainsi que la partie de repère de référence (R2bx) non active, au nombre d'au moins un, des repères de référence (R2x) sélectionnés.

2. Dispositif de mesure pour la mesure de la position relative de deux objets dans lequel une mesure matérialisée porte une graduation et des repères de référence absolus associés, le long de la graduation, dans la direction de mesure de ladite graduation, et dans lequel une unité de lecture lit la graduation et les repères de référence, caractérisé par les caractéristiques suivantes pour la sélection d'au moins un repère de référence nécessaire à la mesure :

a) l'unité de lecture (A) présente au moins deux éléments de lecture de référence (RP3 ; RP4) pour la lecture simultanée d'au moins deux repères de référence (R3n) pour produire simultanément des signaux de référence (RS3) ou d'au moins deux parties de repère de référence (R4an, R4bn, (R4cn) d'un repère de référence (R4n) pour produire des signaux partiels de référence (RS4) ;
b) les signaux de référence (RS3) produits simultanément ou les signaux partiels de référence (RS4) peuvent être mutuellement superposés pour former un signal de référence résultant ;
c) il existe une distance (dx1, dx2) sélectionnée entre le repère de référence sélectionné (R3x) et au moins un repère de référence voisin (R3ax, R3cx) ou entre au moins deux parties de repère de référence (R4ax, R4bx, R4cx) du repère de référence (R4x) sélectionné ;
d) un signal de référence résultant (RRS3x ; RRS4x) exploitable ne peut être produit que lors de la lecture simultanée du repère de référence (R3x) sélectionné et du repère de référence voisin (R3ax, R3cx), au nombre d'au moins un, situé à la distance sélectionnée (dx1, dx2) ou des parties de repère de référence (R4ax, R4bc, R4cx), au nombre d'au moins deux, situées à la distance sélectionnée (dx1, dx2), du repère de référence (R4x) sélectionné.

3. Dispositif selon la revendication 1, caractérisé en ce que les repères de référence (R1n) présentent un même écart (d) mutuel dans la direction de mesure (X), en ce que l'unité de lecture (A) comporte deux éléments de lecture de référence (RP1a, RP1b) à une même distance (d) mutuelle dans la direction de mesure (X), en ce que les deux éléments de lecture de référence (RP1a, RP1b) produisent lors de la lecture simultanée de respectivement deux repères de référence (R1n-1, R1n) deux signaux de référence (RS1n-1, RS1n) de polarité opposée, qui peuvent être mutuellement superposés par addition pour former le signal de référence résultant et en ce qu'il est prévu d'un côté du repère de référence (R1x) sélectionné un repère de référence (R1u) non actif, de telle sorte que lors de la lecture simultanée de deux repères de référence (R1n-1, R1n) non sélectionnés, d'un repère de référence (R1n) non sélectionné et du repère de référence (R1x) sélectionné ainsi que du repère de référence (R1u) non actif et d'un repère de référence (R1n + 1) non sélectionné, on produit un signal de référence résultant non exploitable et, lors seulement de la lecture simultanée du repère de référence (R1x) sélectionné et du repère de référence (R1u) non actif, le signal de référence (RRS1x) résultant exploitable.

4. Dispositif de mesure selon la revendication 1, caractérisé en ce que les repères de référence (R2n) présentent respectivement deux parties de repère de référence (R2an, R2bn) situés l'un au dessus de l'autre perpendiculairement à la direction de mesure (X), en ce que l'unité de lecture (A) comporte deux éléments de lecture de référence (RP2a, RP2b) situés l'un au dessus de l'autre perpendiculairement à la direction de mesure (X), en ce que les deux éléments de lecture de référence (RP2a, RP2b) produisent deux signaux partiels de référence (RS2an, RS2bn) de polarité opposée lors de la lecture simultanée des deux parties de repère de référence (R2an, R2bn) du repère de référence (R2n) concerné, qui peuvent être superposées par addition pour former le signal de référence résultant, et en ce que le repère de référence (R2x) sélectionné comporte une partie de repère de référence (R2bx) non active de telle sorte qu'on produit lors de la lecture simultanée des deux parties de repère de référence (R2an, R2bn) d'un repère de référence non sélectionné (R2n) un signal de référence résultant non exploitable, et lors seulement de la lecture simultanée de la partie de repère de référence (R2ax) et de la partie de repère de référence (R2bx) non active du repère de référence (R2x) sélectionné, le signal de référence (RRS2x) résultant exploitable.

5. Dispositif de mesure selon la revendication 2, caractérisé en ce que les repères de référence (R3n) présentent des écarts mutuels (dn) (n = 1, 2, 3, ...) différents dans la direction de mesure (X), en ce qu'il existe entre le repère de référence (R3x) sélectionné et l'un des repères de référence (R3ax) voisins une première distance (dx1) sélectionnée et entre le repère de référence (R3x) sélectionné et l'autre repère de référence (R3cx) une deuxième distance (dx2) sélectionnée dans la direction de mesure (X), en ce que l'unité de lecture (A) comporte trois éléments de lecture de référence (RP3a, RP3b, RP3c), à des distances mutuelles (dx1, dx2) sélectionnées dans la direction de mesure (X), en ce que les trois éléments de lecture de référence (RP3a, RP3b, RP3c) produisent lors de la lecture respective des repères de référence (R3n), des signaux de référence de même polarité, qui peuvent être mutuellement superposés par addition pour former le signal de référence résultant, de telle sorte que lors de la lecture simultanée de trois repères de référence (R3n) dont les écarts mutuels (dn) diffèrent des deux écarts (dx1, dx2) sélectionnés, on produit un signal de référence résultant non exploitable et, lors seulement de la lecture simultanée du repère de référence (R3x) sélectionné et des deux repères de référence (R3ax, R3cx) voisins avec les deux distances mutuelles (dxl, dx2) sélectionnées, le signal de référence (RRS3x) résultant exploitable.

6. Dispositif de mesure selon la revendication 2, caractérisé en ce que les repères de référence (R4n) comportent respectivement trois parties de repère de référence (R4an, R4bn, R4cn) situés l'un au dessus de l'autre avec des distances mutuelles (d1n, d2n) différentes, perpendiculairement à la direction de mesure (X), en ce que les trois parties de repère de référence (R4ax, R4bx, R4cx) du repère de référence (R4x) sélectionné présentent deux distances mutuelles (dx1, dx2) sélectionnées, perpendiculairement à la direction de mesure (X), en ce que l'unité de lecture (A) comporte trois éléments de lecture de référence (RP4a, RP4b, RP4c) situés l'un au dessus de l'autre avec les deux distances (dx1, dx2) mutuelles sélectionnées, perpendiculairement à la direction de mesure (X), en ce que les trois éléments de lecture de référence (RP4a, RP4b, RP4c) produisent trois signaux partiels de référence de même polarité lors de la lecture simultanée des trois repères de référence (R4an, R4bn, R4cn) du repère de référence (R4n) correspondant qui peuvent être mutuellement superposés par addition pour la formation du signal de référence résultant, de telle sorte que l'on produit lors de la lecture simultanée des trois parties de repère de référence (R4an R4bn, R4cn) d'un repère de référence (R4n) non sélectionné un signal de référence résultant non exploitable et, lors seulement de la lecture simultanée des trois parties de repère de référence (R4ax, R4bx, R4cx) du repère de référence (R4x) sélectionné, le signal de référence (RRS4x) résultant exploitable.

7. Dispositif de mesure selon la revendication 1, caractérisé en ce que le repère de référence (R1u) non actif peut être obtenu par suppression ou par masquage.

8. Dispositif de mesure selon la revendication 1, caractérisé en ce que la partie de repère de référence (R2bx) non active peut être obtenue par suppression ou par masquage.

9. Dispositif de mesure selon l'une des revendications 3 et 4, caractérisé en ce que les deux éléments de lecture de référence (RP1a, RP1b ; RP2a, RP2b) sont branchés en montage anti-parallèle.

10. Dispositif de mesure selon l'une des revendications 5 et 6, caractérisé en ce que les trois éléments de lecture de référence (RP3a, RP3b, RP3c ; RP4a, RP4b, RP4c) sont branchés en parallèle.

Fig.1

**Fig. 2**

**Fig. 3**

## Fig. 4

P

X

R2an    R2ax    R2an+1

R2n    R2x    R2n+1

R2bn    R2bx    R2bn+1

T

M2

ATa    ATb

RAT2a

RAT2b

AP2

Sa    Sb

Pa    Pb

PP2

RP2a    RS2ax

RP2b

RRS2x

## Fig.5

RS2an    RS2ax    RS2an+1

TSS

N2

RS2bn    RS2bn+1

Fig.6

Fig.7

17

EP 0 239 768 B1

Fig. 8

Fig. 9

18